# FASCICULE DE BREVET EUROPEEN

(11) **EP 2 661 539 B1**
(45) Date de publication et mention de la délivrance du brevet: **26.10.2016**
(21) Numéro de dépôt: 12702586.4
(22) Date de dépôt: 05.01.2012
(51) Int. Cl.: E21B 47/09, G01N 27/82

(54) **SONDE D'ANALYSE D'UN ASSEMBLAGE DE TIGES OU TUBES**
SONDE ZUR ANALYSE EINER ANORDNUNG VON STANGEN ODER ROHREN
PROBE FOR ANALYSING AN ASSEMBLY OF RODS OR TUBES

(30) Priorité: 07.01.2011 FR 1150119
(43) Date de publication de la demande: 13.11.2013
(73) Titulaire: Geo Energy, 92380 Garches (FR); Mowat, Gordon, Anahuac, TX 77514 (US); Martin, Jean-Pierre, 92380 GARCHES (FR)
(72) Inventeur: Martin, Jean-Pierre, 92380 Garches (FR)
(74) Mandataire: Thibon, Laurent
(86) Numéro de dépôt international: PCT/FR2012/050034
(87) Numéro de publication internationale: WO 2012/093236

(56) Documents cités:
- WO-A1-95/30895
- FR-A1- 2 761 478
- FR-A1- 2 914 007
- GB-A- 2 422 622
- US-A- 4 717 877
- US-A- 5 959 453

## Description

### Domaine de l'invention

La présente invention concerne les dispositifs et procédés d'analyse de l'état de tiges creuses de forage et de tubes ou tubages d'exploitation utilisés notamment dans le domaine de la recherche et de l'exploitation pétrolière (on parlera ci-après simplement de "tiges").

Tandis qu'on insère dans le sol un train de tiges, ou bien une fois que ce train de tiges de forage ou un tubage d'exploitation est mis en place, on cherche à effectuer diverses mesures sur ce train de tiges ou ce tubage. Par exemple, on cherche à savoir si une tige est coincée par un éboulement en profondeur, cet éboulement pouvant être à plusieurs milliers de mètres du point de départ du forage. On peut aussi chercher à détecter la position des joints du train de tiges ou du tubage. En effet, un train de tiges de forage ou un tubage d'exploitation est constitué d'un assemblage de tiges ou de tubes, ayant par exemple des longueurs de l'ordre de la dizaine de mètres qui sont vissés les uns aux autres et le comptage des joints constitue un repérage de position. On peut aussi chercher à repérer les emplacements de perforations ou de zones d'affaiblissement, notamment par corrosion, des tubages. On peut également chercher à connaître l'état de contrainte en un point d'un train de tiges tandis qu'il est soulevé à partir du point d'origine, par exemple pour créer un point neutre à une profondeur donnée.

### Exposé de l'art antérieur

Actuellement, pour effectuer ces diverses mesures, on utilise notamment des sondes analysant des effets magnétiques induits dans les tiges. Ces sondes comprennent des moyens de mesure du champ magnétique, éventuellement associés à des moyens de création de champ magnétique.

Les moyens de mesure du champ magnétique sont généralement des moyens de mesure du flux magnétique qui ne fonctionnent que si la sonde est en déplacement, l'amplitude des signaux recueillis dépendant étroitement de la vitesse de déplacement.

Les moyens de création d'un champ magnétique dans une tige ou un tube (qui est généralement en un matériau ferromagnétique ou autre matériau susceptible d'acquérir une aimantation rémanente sous l'effet d'un champ) sont généralement des moyens de génération d'un champ alternatif ou en impulsions. On a notamment proposé d'utiliser comme moyen de création de champ des bobines ou des aimants tournants. Ces moyens sont utilisés ou bien pour obtenir une aimantation rémanente périodique dans la tige ou le tube, ou bien plus généralement pour créer des zones locales d'aimantation en appliquant périodiquement des impulsions à une bobine tandis qu'elle se déplace dans le train de tiges ou le tubage.

Tous les moyens utilisés actuellement sont relativement complexes et coûteux, notamment du fait que, quand on veut exciter une bobine à une grande profondeur à l'intérieur d'un train de tiges, il faut alimenter cette bobine par un courant relativement important par des conducteurs de grande longueur, et que de plus le fond d'un puits peut être à une température élevée, pouvant aller jusqu'à des valeurs supérieures à 175°C, ce qui limite considérablement l'énergie qui peut être dissipée dans la bobine.

Une autre difficulté est que la sonde d'analyse envoyée dans un train de tiges est généralement associée à d'autres éléments, comprenant notamment des explosifs destinés à aider au dévissage d'un joint de tiges à un endroit choisi, ou à perforer un tubage pour la mise en production ultérieure d'un puits. Les détonateurs associés à ces explosifs sont susceptibles d'être affectés par des parasites résultant de l'application d'impulsions de courant intenses dans leur voisinage immédiat. Il faut alors prévoir des blindages efficaces, ce qui augmente le coût du dispositif et complique sa réalisation.

Une solution à ces divers problèmes a été proposée dans la demande de brevet français 07/53921 du 20 mars 2007 (FR 2 914 007, considérée comme l'état de la technique) qui prévoit une sonde d'analyse d'un assemblage de tiges ou tubes comprenant un boîtier allongé portant à une première extrémité au moins un premier magnétomètre et à une position suffisamment éloignée du magnétomètre un aimant permanent dont l'axe nord-sud est perpendiculaire à l'axe des tiges.

Cette solution implique que l'aimantation conférée aux tiges n'a pas de symétrie de révolution. Elle donne donc de bons résultats quand ce qui doit être détecté ne dépend pas de l'orientation de l'aimant dans un plan perpendiculaire au tube, par exemple pour la détection d'un coincement, de joints de tiges ou d'un point neutre. Par contre, elle ne permet pas de distinguer une perturbation à symétrie de révolution telle que susmentionnée d'un défaut tel qu'une perforation ou une zone d'affaiblissement, notamment par corrosion, situé dans une zone radiale particulière. Elle ne permet a fortiori pas d'analyser finement un tel défaut.

De plus, si on veut effectuer plusieurs passages successifs, l'aimant ne sera pas orienté de la même façon d'un passage à l'autre et les mesures risquent d'en être perturbées.

### Résumé de l'invention

Ainsi, un objet de la présente invention est de prévoir une sonde particulièrement simple d'analyse d'un assemblage de tiges de forage ou de tubes ou tubages d'exploitation apte à détecter non seulement des particularités ou défauts à symétrie de révolution, mais aussi des particularités ou défauts non à symétrie de révolution, tels que des perforations ou des zones d'affaiblissement, notamment par corrosion, situées dans une zone radiale particulière et d'analyser finement de tels défauts.

Un autre objet de la présente invention est de prévoir plusieurs applications possibles, éventuellement concomitantes, de cette sonde, notamment pour :
- détecter les positions de perforations et/ou de zones d'affaiblissement, par exemple par corrosion, d'un tube, et analyser de tels défauts,
- détecter l'emplacement d'un point de coincement de tiges,
- détecter les positions de joints de tiges ou tubes,
- détecter un point neutre en ce qui concerne la contrainte appliquée à un train de tiges.

Pour atteindre tout ou partie de ces objets ainsi que d'autres, il est prévu une sonde d'analyse d'un assemblage de tiges comprenant un boîtier allongé portant à une première extrémité un aimant permanent dont l'axe nord-sud est parallèle à l'axe des tiges et dont la longueur est supérieure au diamètre interne des tiges, et, à une position suffisamment éloignée de cet aimant, un ensemble de magnétomètres de détection des composantes axiale, radiale et tangentielle de l'aimantation des tiges.

Selon un mode de réalisation de la présente invention, l'aimant est constitué d'un assemblage d'aimants.

Selon un mode de réalisation de la présente invention, les magnétomètres sont des magnétomètres à magnétorésistances.

Il est également prévu un procédé d'analyse utilisant une sonde telle que ci-dessus, comprenant une étape d'aimantation des tiges par passage de la sonde, et une étape de lecture de l'intensité des composantes axiale et radiale d'aimantation pour détecter une anomalie présentant ou non une symétrie de révolution.

Selon un mode de réalisation de la présente invention, quand une anomalie sans symétrie de révolution est détectée, on détermine la forme et les dimensions du défaut correspondant par traitement des composantes axiale, radiale et tangentielle d'aimantation.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue en coupe illustrant de façon schématique une tige dans laquelle est disposée une sonde selon un mode de réalisation de la présente invention ; et
la figure 2 est une vue agrandie d'une partie d'une tige soumise à un champ magnétique selon un mode de réalisation de la présente invention.

### Description détaillée

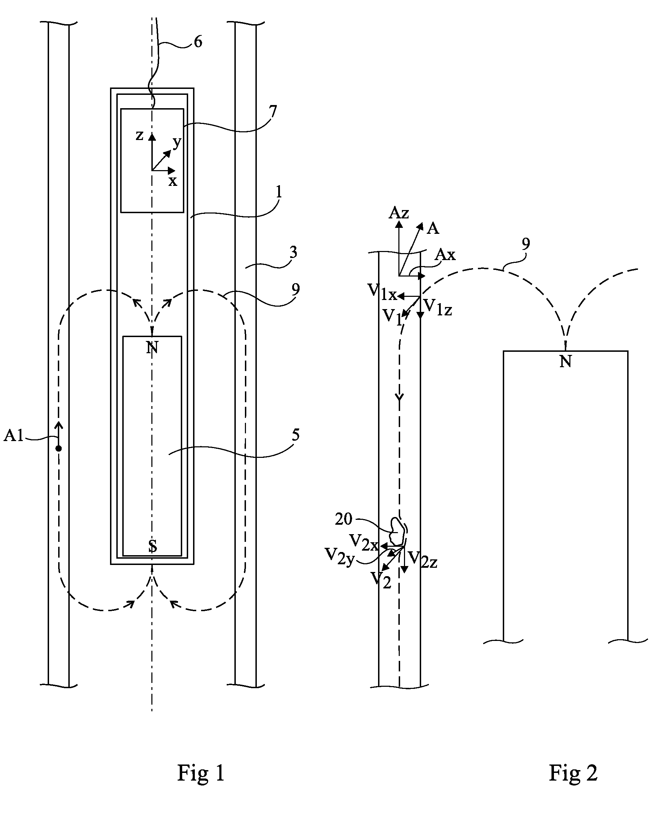

Comme l'illustre la figure 1, un boîtier de sonde 1 est dimensionné pour pouvoir être déplacé à l'intérieur d'un train de tiges 3 en étant lié à un câble 6 de traction et de transmission de signaux électriques.

Comme on l'a expliqué précédemment, le boîtier de sonde 1 comprend habituellement divers éléments autres que les éléments d'analyse qui seront décrits ci-après, par exemple des moyens spécifiques d'entraînement, d'écartement des parois des tiges, de déclenchement d'explosion, de traitement et de transmission de signaux, etc.

Le boîtier de sonde d'analyse magnétique 1 porte un aimant 5 dont l'axe nord-sud est parallèle à l'axe des tiges 3. Ce boîtier porte également un ensemble de dispositifs de mesure de champ magnétique 7 et de circuits électroniques de traitement. Les dispositifs de mesure de champ magnétique 7 sont des magnétomètres, c'est-à-dire des éléments susceptibles de mesurer le champ créé par une aimantation rémanente, indépendamment de tout mouvement de la sonde, par exemple des capteurs à effet Hall ou des capteurs à magnétorésistance. Il faut bien sûr prévoir une configuration telle que l'influence directe de l'aimant 5 sur les dispositifs de mesure soit négligeable. A titre d'exemple, la distance axiale entre l'aimant et chaque ensemble de magnétomètres pourra être de l'ordre de 30 cm à 2 mètres.

La sonde selon la présente invention peut être utilisée de diverses façons selon ce que l'on souhaite mesurer. De façon générale, on commencera par faire descendre la sonde pour aimanter en continu les parois des tiges et on détectera l'aimantation induite dans les tiges au cours de la descente de la sonde ou lors d'une remontée ultérieure de la sonde. Dans ce dernier cas, on aura éventuellement procédé à diverses opérations intermédiaires d'application de contraintes au train de tiges comme cela est décrit en détail dans la demande de brevet français 07/53921 susmentionnée.

Les magnétomètres sont agencés pour détecter les composantes axiale, radiale et tangentielle de l'aimantation et pour détecter la position radiale d'un défaut. Ainsi, on utilisera au moins un magnétomètre de détection de composante axiale et un ensemble de magnétomètres de détection de composantes radiale et tangentielle disposés à la périphérie de la sonde. On pourra utiliser des magnétomètres dont chacun est apte à mesurer de 1 à 3 composantes du champ, par exemple des magnétomètres de la société Honeywell disponibles sous l'appellation HMC 1022 qui fournissent des indications selon deux axes orthogonaux. Les magnétomètres de détection de composantes radiale et tangentielle disposés à la périphérie de la sonde seront en nombre suffisant pour fournir une précision de détermination angulaire souhaitée. Dans le cas où le nombre de magnétomètres est important, ces magnétomètres pourront être disposés sur plusieurs plans transverses pour tenir compte de l'encombrement des dispositifs. Ces magnétomètres seront par exemple disposés en hélice. Le décalage en z des résultats fournis sera alors pris en compte par un logiciel de traitement.

Comme l'illustre la figure 1, le champ généré par l'aimant 5 induit un champ magnétique dans les tiges 3, sensiblement selon les flèches 9, de sorte qu'en chaque point des tiges est produit une aimantation essentiellement axiale désignée par le vecteur A1.

La figure 2 est une vue en coupe agrandie et partielle d'une portion de la figure 2 pour mieux illustrer le cheminement des lignes de champ magnétique 9 et leur effet sur le tube.

Les lignes de champ pénètrent obliquement dans les tiges selon un vecteur V1 qui a deux composantes, une composante axiale V1z et une composante radiale V1x.

Ainsi, une fois que l'aimant s'est déplacé verticalement le long d'une portion d'un tube, il demeure une aimantation A qui comprend une composante axiale Az et une composante radiale plus faible Ax. Si le tube est régulier sur toute sa périphérie à l'emplacement considéré, cette même aimantation A se retrouve sur toute la périphérie du tube.

Quand les lignes de champ magnétique rencontrent un défaut dans le tube, par exemple une lacune 20 créée par exemple par de la corrosion, les lignes de champ sont déviées et ainsi le vecteur de champ V2 aura des composantes V2z, V2x et V2y, d'où il résulte une zone dans laquelle le vecteur d'aimantation aura des composantes radiale, tangentielle, et axiale A2x, A2y et A2z (non représentées).

Lors du passage de la partie d'analyse de la sonde, les magnétomètres répartis autour de la périphérie du dispositif détecteront l'existence de ces composantes radiale et tangentielle, irrégulièrement réparties sur la périphérie du tube. On peut donc en déduire la présence d'un défaut et divers moyens de traitement analytique permettront de quantifier la forme et les dimensions de ce défaut.

Ainsi, la sonde selon la présente invention permet de détecter des irrégularités à symétrie de révolution, correspondant par exemple à des joints de tiges, et de les distinguer de défauts localisés correspondant par exemple à de la corrosion ou à des perçages.

On a décrit ici plus particulièrement le mode de détection d'un défaut localisé. Pour détecter l'emplacement d'un coincement de tige, pour réaliser un comptage de joints ou pour aider au dévissage d'un train de tiges de forage à une profondeur donnée, on pourra utiliser la sonde de la même façon que cela a été décrit dans la demande de brevet français 07/53921 susmentionnée. La détection est alors essentiellement basée sur les indications données par un magnétomètre de détection de composante axiale, alors que les magnétomètres de détection de composantes radiale et tangentielle donnent des indications identiques (symétrie de révolution).

Un avantage du montage axial de l'aimant 5 réside dans le fait que cet aimant peut avoir et aura de préférence une longueur nettement supérieure au diamètre des tiges à analyser choisie en fonction de l'intensité de l'aimantation que l'on veut imposer dans les parois du tube. Cet aimant pourra être constitué d'un empilement d'aimants élémentaires. Les aimants seront par exemple des aimants au samarium-cobalt ou au néodyme-fer-bore capables de créer une induction magnétique de forte valeur.

Un autre avantage du montage axial de l'aimant 5 réside dans la caractéristique de répétitivité des mesures obtenues. Cet aspect est très important car les mesures de corrosion des tubages sont effectuées à intervalles réguliers dans la vie d'un puits afin de suivre l'évolution de cette corrosion pour pouvoir intervenir éventuellement au moment opportun pour corriger la situation. Avec un aimant axial, l'aimantation est toujours dans le même sens quelle que soit l'orientation en rotation de la sonde par rapport au puits et, de plus, elle se renforce de façon homogène à chaque passage de l'aimant, ce qui renforce les signaux mesurés.

On notera en outre que, avec un aimant axial tel que décrit ici, on pourra utiliser une même sonde pour aller dans des tiges de diamètres assez différents, par exemple des tiges de forage d'un diamètre de 8,75 à 12,5 cm (3,5 à 5 pouces), des tubages d'exploitation dans lesquels on arrive par un tube de remontée d'hydrocarbure, le tubage ayant par exemple un diamètre de 17,5 cm (7 pouces) alors que le tube de remontée d'hydrocarbure a seulement un diamètre de 5 à 6,1 cm (2 pouces à 2 pouces 3/8^{ème}). En effet, il suffira que l'aimant axial ait une longueur au moins égale au plus grand diamètre possible, à savoir 17,5 cm ou 7 pouces dans le cas de l'exemple ci-dessus.

Ces avantages particuliers de la présente invention résultent de l'association simple d'un aimant permanent fixe de forte puissance avec un détecteur du type magnétomètre. L'utilisation avec un aimant fixe de capteurs de mesure à variation de flux et non de capteurs d'aimantation ne fournirait pas les mêmes résultats puisqu'on ne pourrait alors effectuer les mesures que pendant un déplacement de la sonde.

La présente invention est susceptible de nombreuses variantes et modifications qui apparaîtront à l'homme de l'art. Notamment, on pourra adopter un système tel que décrit dans la demande de brevet susmentionnée, dans lequel des détecteurs sont disposés de part et d'autre de l'aimant.

## Revendications

1. Sonde d'analyse d'un assemblage de tiges comprenant un boîtier allongé (1) portant à une première extrémité un aimant permanent (5) et, à une position suffisamment éloignée de cet aimant, un ensemble de magnétomètres (7) de détection des composantes axiale, radiale et tangentielle de l'aimantation des tiges, **caractérisée en ce que** l'aimant permanent a un axe nord-sud parallèle à l'axe des tiges et une longueur supérieure au diamètre interne des tiges

2. Sonde selon la revendication 1, dans laquelle ledit aimant (5) est constitué d'un assemblage d'aimants.

3. Sonde selon la revendication 1, dans laquelle les magnétomètres (7) sont des magnétomètres à magnétorésistances.

4. Procédé d'analyse utilisant une sonde selon l'une quelconque des revendications 1 à 3, comprenant :
une étape d'aimantation des tiges par passage de la sonde, et
une étape de lecture de l'intensité des composantes axiale et radiale d'aimantation pour détecter une anomalie présentant ou non une symétrie de révolution.

5. Procédé d'analyse selon la revendication 4, dans lequel, quand une anomalie sans symétrie de révolution est détectée, on détermine la forme et les dimensions du défaut correspondant par traitement des composantes axiale, radiale et tangentielle d'aimantation.

## Patentansprüche

1. Sonde zum Analysieren einer Stangenanordnung, die ein langgestrecktes Gehäuse (1) aufweist, das an einem ersten Ende einen Permanentmagneten (5) trägt und an einer Position ausreichend entfernt von diesem Magnet eine Anordnung von Magnetometern (7) zum Detektieren von axialen, radialen und tangentialen Komponenten der Magnetisierung der Stangen, **dadurch gekennzeichnet, dass** der Permanentmagnet eine Nord-Süd-Achse hat, die parallel zur Achse der Stangen ist, und eine Länge, die größer ist als ein Innendurchmesser der Stangen.

2. Sonde nach Anspruch 1, wobei der Magnet (5) aus einer Anordnung von Magneten geformt ist.

3. Sonde nach Anspruch 1, wobei die Magnetometer (7) Magnetwiderstandsmagnetometer sind.

4. Analyseverfahren, welches die Sonde nach einem der Ansprüche 1 bis 3 verwendet, welches Folgendes aufweist:
einen Schritt des Magnetisierens der Stangen durch Durchlaufen der Sonde und
einen Schritt des Lesens der Intensität der axialen und radialen Magnetisierungskomponenten, um eine Anomalie zu detektieren, die eine Rotationssymmetrie hat oder nicht.

5. Analyseverfahren nach Anspruch 4, wobei, wenn eine Anomalie ohne Rotationssymmetrie detektiert wird, die Form und die Abmessungen des entsprechenden Fehlers durch Verarbeiten der axialen, radialen und tangentialen Magnetisierungskomponenten bestimmt werden.

## Claims

1. A probe for analyzing a rod assembly comprising an elongated housing (1) supporting at a first end a permanent magnet (5) and, at a position sufficiently distant from this magnet, an assembly of magnetometers (7) for detecting the axial, radial, and tangential components of the rod magnetization, **characterized in that** the permanent magnet has a north-south axis parallel to the axis of the rods and a length greater than the internal diameter of the rods.

2. The probe of claim 1, wherein said magnet (5) is formed of an assembly of magnets.

3. The probe of claim 1, wherein the magnetometers (7) are magnetoresistance magnetometers.

4. An analysis method using the probe of any of claims 1 to 3, comprising:
a step of magnetizing the rods by passage of the probe, and
a step of reading the intensity of the axial and radial magnetization components to detect an anomaly having or not a symmetry of revolution.

5. The analysis method of claim 4, wherein, when an anomaly having no symmetry of revolution is detected, the shape and the dimensions of the corresponding defect are determined by processing the axial, radial, and tangential magnetization components.
